(19) Europäisches Patentamt
European Patent Office
Office européen des brevets

(11) **EP 3 742 143 A1**

(12) **EUROPEAN PATENT APPLICATION**

(43) Date of publication:
**25.11.2020 Bulletin 2020/48**

(51) Int Cl.:
***G01L 5/00*** (2006.01)

(21) Application number: **19175452.2**

(22) Date of filing: **20.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
• **A. TAYEB, Mohammed**
**23955-6900 Thuwal (SA)**

• **E. OWENS III, Donald**
**23955-6900 Thuwal (SA)**
• **ALAKEL, Sahel**
**23955-6900 Thuwal (SA)**
• **ALSALEM, Fahad Khalid**
**23955-6900 Thuwal (SA)**
• **ALSHARIF, Yasir**
**23955-6900 Thuwal (SA)**

(74) Representative: **Elzaburu S.L.P.**
**Miguel Angel 21, 2nd floor**
**28010 Madrid (ES)**

(54) **TRIBOELECTRIC IMPACT SENSOR AND APPLICATIONS FOR ITS USE**

(57)    An impact sensor (100) includes: a triboelectric sensor (110) including a substrate layer, an electrode layer, and a triboelectric layer; and a diode bridge (120) configured to identify a peak voltage generated by an impact on the triboelectric sensor or vibration of the triboelectric sensor. The triboelectric layer includes a triboelectric polymer. In other aspects an impact sensor includes: a triboelectric sensor including a substrate layer, an electrode layer, and a triboelectric layer including a triboelectric polymer; and a diode bridge configured to identify a peak voltage generated by an impact on the triboelectric sensor or vibration of the triboelectric sensor. The impact sensor includes a patterned electrode, and the patterned electrode is configured to identify a location of the impact or vibration on the triboelectric sensor.

FIG. 1

## Description

### FIELD OF THE DISCLOSURE

The present disclosure relates to impact sensors, and in particular to triboelectric impact sensors that can identify for and location of impact or vibration.

### BACKGROUND OF THE DISCLOSURE

Generally, impact or shock sensors describe the nature of the impact through the acceleration peak and the duration of the impact. However, in many applications, these are not the only relevant factors. For example, a fast response time is critical in collision detection systems. In addition, the ability to distinguish between the types of material (a person or a car for example) involved in an impact is also important. Other factors, like identifying impacted zones, the size of the sensor, and more importantly the manufacturing cost, may also be important. Conventional materials and devices are largely limited to specific and narrow applications due to the difficulty of combining all required features in a single device or material.

Several impact sensors are already commercially available. One of the most common is the piezoelectric impact sensor, which utilizes the interaction of a floating weight pushing on a fixed piezoelectric material to sense changes in force or acceleration. While widely used, these systems are typically only able to measure force changes in one direction, which is the direction of free motion for the floating mass. In addition, these devices are bulky, costly, and relatively complex to fabricate. Another type of sensor that falls within this category is the piezo-resistive sensor. It differs from the piezoelectric technology in the output measurement, as it measures the change in resistance instead of voltage. A major drawback of this technology is the possibility of the sensor to vibrate in its natural resonant frequency due to a shock vibration, which could damage the sensor. Other application-specific technologies such as the spring-mass system and suspended droplet shock detector are bulky and complex systems.

There are numerous potential applications where the accurate measurement of impact forces could be of interest, especially in the automotive and athletic equipment markets. However, most conventional impact sensors and devices are either too large, heavy, bulky and obtrusive or lack the ability to determine the location of an impact, and are thus not useful in many of these applications.

In the automotive market cars are generally equipped with several internal accelerometer systems that can determine if a car has been in a collision and do things like deploy airbags if certain acceleration change thresholds have been exceeded. However, one limitation of these systems is the ability to accurately determine the type of collision (head-on, off-set head-on, side impact, etc.) that has occurred.

In the athletic market, there are many examples where location sensors would be of interest such as in table tennis and golf, where the accuracy and distance that a player can achieve in a given shot is highly dependent upon the ability to accurately strike the ball with a precise portion of the clubface or paddle. Similar requirements exist in other sports in which a player needs to strike a ball, such as but not limited to baseball, tennis, and cricket. In order to better analyze a player's swing speed, force, and location of contact a very large and expensive high-speed camera system and image analysis software is required.

Location sensors could also enhance safety in the athletics market. For example, in American football players wear helmets to protect them from injury, although it has been proven that even with the use of helmets brain injury can occur when the player is subjected to high impact forces. Location sensors in the helmet could improve player safety by providing real-time data to alert medical staff and trainers when potentially dangerous impacts have occurred.

Certain conventional impact sensors such as those described herein have been used in some sports applications, however these systems remain bulky and negatively impact a player's performance when applied to a club or bat/etc. As a result, they have not been widely adopted.

These and other shortcomings are addressed by aspects of the disclosure.

### SUMMARY

Aspects of the disclosure relate to an impact sensor, including: a triboelectric sensor including a substrate layer, an electrode layer, and a triboelectric layer; and a diode bridge configured to identify a peak voltage generated by an impact on the triboelectric sensor or vibration of the triboelectric sensor. The triboelectric layer includes a triboelectric polymer.

Further aspects of the disclosure relate to a method for determining impact or vibration on an object, including: (a) applying an impact sensor to the object, the impact sensor including (1) a triboelectric sensor including a substrate layer, an electrode layer, and a triboelectric layer including a triboelectric polymer, and (2) a diode bridge configured to identify a peak voltage generated by an impact on the triboelectric sensor or vibration of the triboelectric sensor; (b) measuring the peak voltage generated by the impact or vibration; and (c) determining force applied to the impact sensor from the peak voltage.

Particular aspects of the disclosure relate to an impact sensor, including: (a) a triboelectric sensor including a substrate layer, an electrode layer including a patterned electrode, and a triboelectric layer including a triboelectric polymer; and (2) a diode bridge configured to identify a peak voltage generated by an impact on the triboelectric sensor or vibration of the triboelectric sensor. The patterned electrode is configured to identify a location of the impact or vibration on the triboelectric sensor.

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a diagram of an impact sensor according to aspects of the disclosure.
FIG. 2 is a block diagram of an impact sensor including a processing unit according to aspects of the disclosure.
FIG. 3 is a diagram showing a method for determining force applied to an impact sensor.
FIGS. 4A and 4B illustrate methods for determining force applied to an impact sensor by fixed mass objects having a variable height (FIG. 4A) and fixed height objects having a variable mass (FIG. 4B).
FIG. 5 is a block diagram illustrating a method for determining impact or vibration on an object.
FIG. 6 is a diagram of an impact sensor including a patterned electrode according to aspects of the disclosure.
FIGS. 7A and 7B are examples of impact sensors including a patterned electrode according to aspects of the disclosure.
FIGS. 8A and 8B are optical images of impact sensors formed according to aspects of the disclosure.
FIG. 9 is an optical image of an experimental set-up for determining impact force on an impact sensor.
FIG. 10 is a graph of instantaneous peak voltage vs. impact energy for two impact sensors formed according to aspects of the disclosure.
FIGS. 11A-11C are graphs showing voltage vs. time for one of the impact sensors formed according to aspects of the disclosure.

## DETAILED DESCRIPTION

The present disclosure can be understood more readily by reference to the following detailed description of the disclosure and the Examples included therein. In various aspects, the present disclosure pertains to an impact sensor including: a triboelectric sensor including a substrate layer, an electrode layer, and a triboelectric layer; and a diode bridge configured to identify a peak voltage generated by an impact on the triboelectric sensor or vibration of the triboelectric sensor. The triboelectric layer includes a triboelectric polymer.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

## Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Impact Sensor**

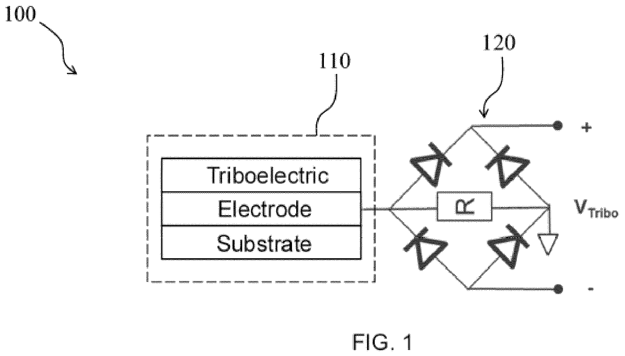

With reference to FIG. 1, aspects of the disclosure relate to an impact sensor 100 including: a triboelectric sensor 110 including a substrate layer, an electrode layer, and at least one triboelectric layer; and a diode bridge 120 configured to identify a peak voltage generated by an impact on the triboelectric sensor 110 or vibration of the triboelectric sensor 110. In some aspects the triboelectric sensor 110 includes a single triboelectric layer; in other aspects the triboelectric sensor 110 includes two or more triboelectric layers. In further aspects the triboelectric sensor 110 includes at least one protective layer.

The triboelectric layer includes a triboelectric polymer that generates a triboelectric effect. The triboelectric effect refers to the generation of charges that occurs when two materials with different triboelectric affinities are brought into close contact. The charge density accumulated during this contact event increases with the applied mechanical pressure due to increased contact between the two layers. Electrons are transferred due to the potential difference between the electrode and the ground in the forward and backward directions. Thus, as impact occurs on the surface of the triboelectric sensor 110, the triboelectric polymer generates electric charges that are translated into a pulse of voltage through the diode bridge 120. The amplitude of the voltage is related to the impact force exerted on the surface of the triboelectric sensor 110, which in turn can be calibrated and used to calculate the force applied during an impact or shock event.

The triboelectric polymer can include any polymeric material that can generate a triboelectric effect. Exemplary triboelectric polymers include, but are not limited to, cross-linkable polycarbonate including photoactive polycarbonate (XPC) and isofluoropropyl polyhedral oligomeric silsesquioxane (F-POSS) (XPC-F-POSS), poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), and combinations thereof.

In particular aspects the triboelectric polymer includes the cross-linkable polycarbonate XPC-F-POSS. In such aspects the cross-linkable polycarbonate includes from about 70 wt% to about 99 wt% XPC and from about 1 wt% to about 30 wt% F-POSS. In further aspects the cross-linkable polycarbonate includes from about 75 wt% to about 95 wt% XPC and from about 5 wt% to about 25 wt% F-POSS, or in particular aspects about 85 wt% XPC and about 15 wt% F-POSS.

In further aspects the triboelectric polymer includes PVDF-TrFE, and the PVDF-TrFE includes from about 50 wt% to about 80 wt% polyvinylidenefluoride (PVDF) and from about 20 wt% to about 50 wt% trifluoroethylene (TrFE). In particular aspects the PVDF-TrFE includes from about 60 wt% to about 80 wt% PVDF and from about 20 wt% to about 40 wt% trifluoroethylene, or in specific aspects about 70 wt% PVDF and about 30 wt% TrFE.

The substrate layer in the triboelectric sensor 110 functions as a carrier for the electrode layer. The substrate layer is non-electrically conductive in some aspects, and may also be a flexible layer. The substrate layer and can include any suitable material. In some aspects the substrate layer includes, but is not limited to, glass, silicon, polyethylene naphthalate (PEN), polyethylene terephthalate (PET), polyetherimide (PEI), polycarbonate (PC), polyimide (PI), and combinations thereof.

The electrode layer in the triboelectric sensor is provided to transport the charge generated in the triboelectric layer to the diode bridge 120. The electrode layer may include any suitable conductive material. Example materials for use in the electrode layer include, but are not limited to, copper and indium tin oxide (ITO).

As shown in FIG. 1, the electrode layer may in some aspects overlie the substrate layer, and the triboelectric layer overlies the electrode layer.

As noted, the diode bridge 120 is configured to identify a peak voltage generated by an impact on the triboelectric sensor 110 or vibration of the triboelectric sensor 110. Any configuration suitable for identifying the peak voltage may be used. In one aspect illustrated in FIG. 1 the diode bridge 120 is a full-wave bridge rectifier arranged in parallel with a resistor.

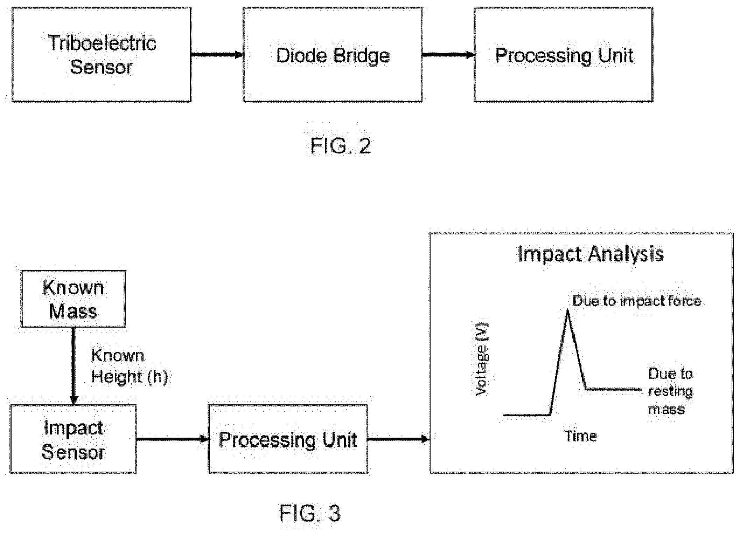

As shown in FIG. 2, the signal generated by the triboelectric sensor 110 that passes through the diode bridge 120 is sent to a processing unit as a peak voltage. The processing unit determines the force applied to the impact sensor 100 from the peak voltage.

Determination of the force applied to the impact sensor 100 can be determined according to the following method. With reference to FIG. 3, known masses (e.g., aluminum cylinders) are allowed to fall freely and impact the impact sensor 100 from different heights. The sensor interacts with an impacting object generating a voltage that is measured and later recorded and used to calculate the force of the impact. A schematic description of the expected voltage output response due to the impact is depicted in FIG. 3. When the mass hits the sensor, it momentarily exerts an instantaneous force that is higher than the weight of the mass due to the impact. The force then decreases and saturates at a certain value showing only the force caused by the static mass (see the residual voltage in FIG. 3). The weight of the object is the potential energy, but during the impact event, the kinetic energy is transferred to the sensor, causing the voltage spike. After the impact event, the object weight is all that remains (as potential energy), and this residual energy is measured as a continuous lower voltage response.

Impact Energy Calculation: The potential energy at the target height equals the kinetic energy just before collision and as such, the following equation is used to calculate the impact energy:

$$Impact\ Energy = U_{impact} = mgh$$

Where:

U is the potential energy
m is the mass
g is the gravity constant
h is the drop object height

This equation neglects trivial resistances caused from, e.g., the air or friction of the falling object; this error is expected to fall within the experimental error.

From this analysis, as the height increases so does the impact energy and as a result the output electronic response is expected to increase. In principal, as impact energy increases so does sensor deformation, leading to more contact area and greater accumulation of charge density. The impact energy is related to the instantaneous initial force.

Shock sensor calculation: The shock can be evaluated by defining the change in acceleration and impact duration. Knowing that the impact sensor 100 can measure the exerted force during the impact, and according to Newton's second law, the following equation is derived:

$$a = \frac{F}{m}$$

Where:

a is the acceleration
m is the mass
F is the impact force

In principle, the higher the height of the falling mass, the higher the change in acceleration during the impact. This is because the impact velocity would be higher according to the following equation:

$$v_{impact} = \sqrt{2gh}$$

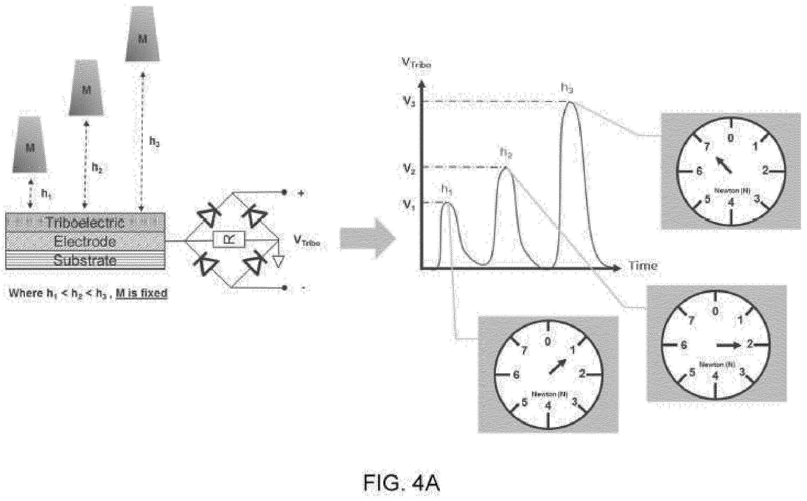

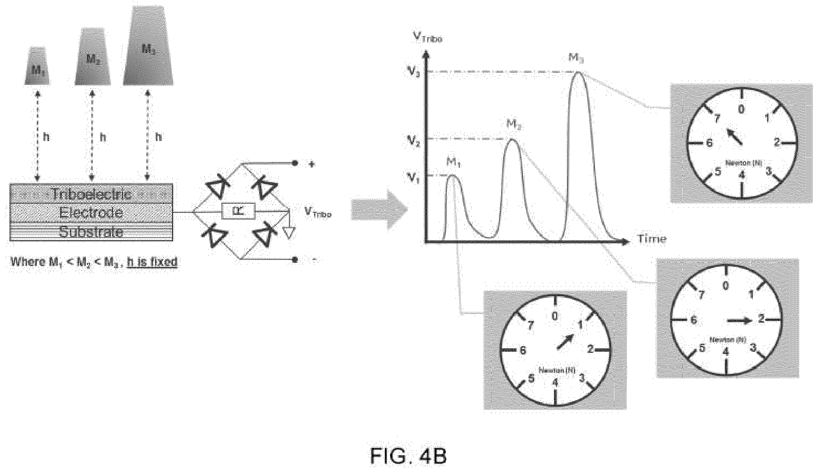

Thus, the impact force/energy of a falling object depends mainly on two parameters: the mass of the object (M), and the height of the fall (h). The impact force/energy is directly proportional to both parameters, meaning that as either the height or the mass increases the impact force/energy increases as well. The integration of the impact sensor 100 with the circuit, and the response of different heights, is illustrated in FIG. 4A. As the height of the fall increases, the potential energy increases as well, leading to a higher impact energy due to the law of conservation of energy. After that, the output voltage is calibrated by the processing unit to display the corresponding impact force. Similarly, variation in the object's mass leads to different impact energy levels as illustrated in FIG. 4B.

The impact sensor 100 described herein thus provides numerous features/advantages over conventional shock/impact sensors. Such features/advantages include but are not limited to: flexibility of shape and design; it can be a thin form; it can be flexible; the sensor may be optically transparent, translucent, or opaque depending on the choice of materials; it can be integrated into three-dimensional structures/surfaces; it is inexpensive and simple to integrate with current manufacturing processes; it could be self-powered; it is suitable for multiple functions (e.g., it can detect touch, applied force, contact material, and vibration/shock/ impact/acceleration); it can measure the time of the impact; it provides a fast response time; it can specify the position of the impact (discussed below); and it could distinguish between objects.

The impact sensor 100 may be suitable in numerous applications. Such applications include, but are not limited to, a static weight balance, shock measurements, vibration detection, acceleration measurements, collision detection systems, automobile theft protection, determining firmness of products, pedestrian impact sensor systems, building and structural monitoring, and athletic articles (as described below).

## Methods for Determining Impact or Vibration

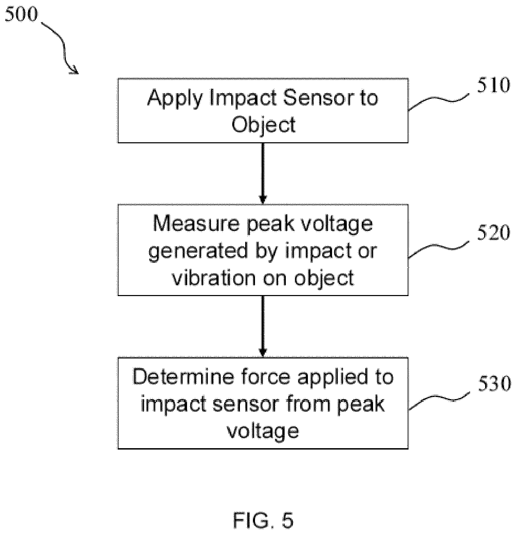

With reference to FIG. 5, aspects of the disclosure further relate to a method 500 for determining impact or vibration on an object, including: applying an impact sensor to the object, at step 510; measuring the peak voltage generated by an impact or vibration on an object, at step 520; and determining the force applied to the impact sensor from the peak voltage, at step 530. The impact sensor corresponds to the impact sensor 100 described herein, and includes: a substrate layer, an electrode layer, and a triboelectric layer including a triboelectric polymer; and a diode bridge configured to identify a peak voltage generated by an impact on the triboelectric sensor or vibration of the triboelectric sensor. In further aspects the impact sensor may include one or more additional triboelectric layers and/or at least one protective layer. The impact sensor and components thereof could include any of the materials - and in the amounts - described herein for the impact sensor 100.

The step 520 of measuring the peak voltage generated by an impact or vibration on an object and step 530 of determining the force applied to the impact sensor from the peak voltage can be performed by a processing unit such as that described herein.

## Impact Sensor Including a Patterned Electrode

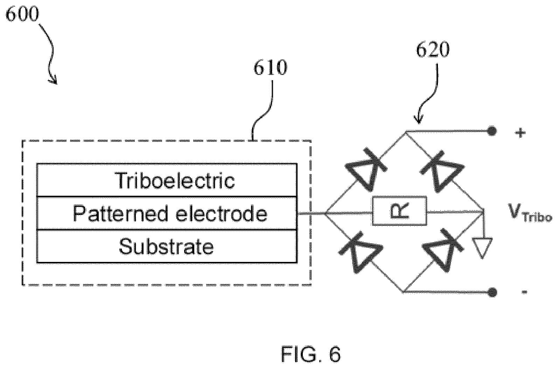

With reference to FIG. 6, aspects of the disclosure further relate to an impact sensor 600 including triboelectric sensor 610 and a diode bridge 620 configured to identify a peak voltage generated by an impact on the triboelectric sensor or vibration of the triboelectric sensor. The triboelectric sensor 610 includes a substrate layer, an electrode layer including a patterned electrode, and a triboelectric layer including a triboelectric polymer. The patterned electrode is configured to identify a location of the impact or vibration on the triboelectric sensor 610. In further aspects the impact sensor 600 may include one or more additional triboelectric layers and/or at least one protective layer.

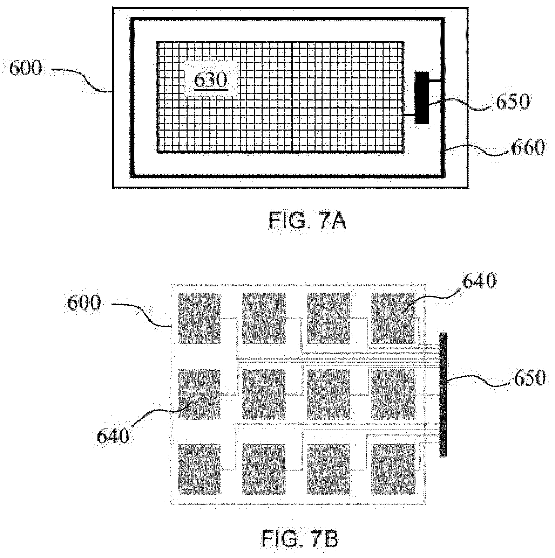

The patterned electrode could be provided in any suitable form. In one aspect illustrated in FIG. 7A, the patterned electrode is in the form of a conductive mesh grid 630. The conductive mesh grid 630 includes a plurality of electrode lines in an x-y grid system, which would allow the location of an impact/vibration to be determined by identifying the location on the grid where the impact/vibration occurs. In another aspect the patterned electrode could include a plurality of electrode pads 640, as shown in FIG. 7B. The electrode pads 640 could each be individually monitored so as to identify the location on which an impact or vibration occurs on the impact sensor 600. Other exemplary patterned electrode forms could be used, including concentric. However many other conductive grid patterns could also be envisioned as well such as but not limited to independently monitored concentric circles or other shapes.

The electrode layer including the patterned electrode serves a dual purpose of allowing the transport of charges generated during operation of the sensor as well as determining the location within the sensor where those charges have been generated. The electrode layer operates with the triboelectric layer which generates a voltage spike or signal upon being impacted by another surface or object. The amplitude of the voltage or current signal generated is positively related to the impact force exerted on the sensor, and can be measured and analyzed via an electronic circuit that is either incorporated into the polymeric sensor itself, via thin-film circuitry, for example thin film transistors (TFTs) 650, or using a conventional electronic circuit. The location of the impact on the impact sensor 600 can be determined by independently monitoring the individual patterned electrode pads or junctions. Once the voltage or current signal is analyzed and the force and location of the impact has been determined, this information can then be stored or relayed via a wireless communication system, such as a wireless antenna 660, a Bluetooth chip set, or the like. The configuration of the components of the impact sensor 600 can be modified according to the application of the sensor and other design factors.

The impact sensor 600 and components thereof could include any of the materials - and in the amounts - described herein for the impact sensor 100.

In some aspects the impact sensor 600 includes an adhesive layer including an adhesive so that the sensor may be applied to a component (such as the face of a golf club or a sport helmet as described below). The adhesive layer could be the same layer as the substrate layer or could be applied to the substrate layer as a separate layer. In such aspects the impact sensor 600 may also be provided with a removable/disposable non-stick layer that is applied to the adhesive layer. The non-stick layer protects the adhesive layer until such time that the impact sensor 600 is to be attached to an object and then removed to expose the adhesive layer.

The impact sensor 600 may further include other components as necessitated by the application. In further aspects an encapsulation or protection layer may be provided on one or both sides of the triboelectric sensor 610.

The impact sensor 600 may be used in any suitable application. In one aspect, the impact sensor 600 could be configured to be applied to the face of a golf club for golf swing and strike analysis (e.g., whether the club struck the ball in the "sweet spot"). In other aspects, the impact sensor 600 could be configured to be applied to a racket/paddle (such as a tennis racquet or ping pong paddle) to allow analysis of ball strike accuracy and speed. In a further aspect the impact sensor 600 could be configured to be applied to a bat (e.g., a baseball/softball bat or a cricket bat) to allow analysis of where and how hard the bat contacted the ball.

In a particular aspect the impact sensor 600 could be configured for application to a sport helmet (e.g., a football helmet) to provide for collision/impact monitoring. In American Football, for example, players are required to wear helmets to protect them from injury, however it has been proven that even with the use of helmets brain injury can still occur when high impact forces occur. Additionally, these helmets already come decorated with the teams' logo and other designs. Thus, the impact sensor 600 could be designed to look just like standard football helmet logos only with the added capability to measure and transmit data related to impacts that occur during a game. This information would be useful for improving player safety and providing real-time data to medical staff and trainers to alert them in cases where potentially dangerous impacts have occurred and the sensor itself would be non-intrusive and would look no different than the logos already present on the players helmets. The impact sensor 600 could be used in any other sport or applications where helmets and other safety gear are required.

In yet further aspects the impact sensor 600 could be applied to a bumper or other component of a motor vehicle to allow for monitoring conditions relating to a collision/impact to the vehicle, including but not limited to (1) the fact that a collision has occurred, (2) the force of the collision, and (3) the type of collision. This information could then be used to optimize how the vehicle responds in the critical instant after impact and could further improve driver safety.

Other suitable applications for the impact sensor 600 include, but are not limited to, other sporting safety equipment (knee/elbow/shin pads, shoulder pads, etc.), application directly to a sporting ball (e.g. soccer ball, basketball, volleyball, etc.), and in for recording points in tactic striking sports (e.g., paintball, fencing, boxing, martial arts, etc.).

In each of these applications, data from the impact sensor 600 could be transmitted in real time during a game, practice session, etc. to allow analysis of the results by a coach/doctor/etc.

The impact sensor 600 described herein thus provides numerous features/advantages over conventional shock/impact sensors. Such features/advantages include but are not limited to: shape and design freedom (e.g., the sensor could look like a logo or have any preferred design without hindering functionality of the sensor); thin and flexible so it is non-intrusive and does not negatively impact the performance of the user/machine; it could be optically transparent, translucent, or opaque (depending on the choice of materials); it can be integrated into 3D structures and surfaces; it is inexpensive and simple to integrate with current manufacturing processes; it could be disposable; it could be self-powered; it has the ability to measure the time of the impact; it has a fast response time; the ability to specify the position of the impact; the ability to distinguish between objects; and the ability to withstand high impact energies.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. An impact sensor, comprising:

a triboelectric sensor comprising a substrate layer, an electrode layer, and a triboelectric layer comprising a triboelectric polymer; and
a diode bridge configured to identify a peak voltage generated by an impact on the triboelectric sensor or vibration of the triboelectric sensor.

Aspect 2. The impact sensor according to claim 1, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

Aspect 3. The impact sensor according to claim 1 or 2, wherein the diode bridge is a full-wave bridge rectifier arranged in parallel with a resistor.

Aspect 4. The impact sensor according to any of Aspects 1 to 3, wherein the triboelectric polymer comprises cross-linkable polycarbonate comprising photoactive polycarbonate (XPC) and isofluoropropyl polyhedral oligomeric silsesquioxane (F-POSS).

Aspect 5. The impact sensor according to Aspect 4, wherein the cross-linkable polycarbonate comprises from about 70 wt% to about 99 wt% XPC and from about 1 wt% to about 30 wt% F-POSS.

Aspect 6. The impact sensor according to any of Aspects 1 to 3, wherein the triboelectric polymer comprises PVDF-TrFE and the PVDF-TrFE comprises from about 50 wt% to about 80 wt% polyvinylidenefluoride (PVDF) and from about 20 wt% to about 50 wt% trifluoroethylene.

Aspect 7. The impact sensor according to any of Aspects 1 to 6, wherein the substrate layer comprises glass, silicon, polyethylene naphthalate (PEN), polyethylene terephthalate (PET), polyetherimide (PEI), polycarbonate (PC), polyimide (PI), or a combination thereof.

Aspect 8. The impact sensor according to any of Aspects 1 to 7, wherein the electrode layer overlies the substrate layer and the triboelectric layer overlies the electrode layer.

Aspect 9. A method for determining impact or vibration on an object, comprising:

applying an impact sensor to the object, the impact sensor comprising

a triboelectric sensor comprising a substrate layer, an electrode layer, and a triboelectric layer comprising a triboelectric polymer; and
a diode bridge configured to identify a peak voltage generated by an impact on the triboelectric sensor or vibration of the triboelectric sensor;

measuring the peak voltage generated by the impact or vibration; and
determining force applied to the impact sensor from the peak voltage.

Aspect 10. The method according to Aspect 9, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

Aspect 11. The method according to Aspect 9 or 10 wherein the diode bridge is a full-wave bridge rectifier arranged in parallel with a resistor.

Aspect 12. The method according to any of Aspects 9 to 11, wherein the triboelectric polymer comprises cross-linkable polycarbonate comprising photoactive polycarbonate (XPC) and isofluoropropyl polyhedral oligomeric silsesquioxane (F-POSS).

Aspect 13. The method according to Aspect 12, wherein the cross-linkable polycarbonate comprises from about 70 wt% to about 99 wt% XPC and from about 1 wt% to about 30 wt% F-POSS.

Aspect 14. The method according to any of Aspects 9 to 11, wherein the triboelectric polymer comprises PVDF-TrFE and the PVDF-TrFE comprises from about 50 wt% to about 80 wt% polyvinylidenefluoride (PVDF) and from about 20 wt% to about 50 wt% trifluoroethylene.

Aspect 15. The method according to any of Aspects 9 to 14, wherein the substrate layer comprises glass, silicon, polyethylene naphthalate (PEN), polyethylene terephthalate (PET), polyetherimide (PEI), polycarbonate (PC), polyimide (PI), or a combination thereof.

Aspect 16. The method according to any of Aspects 9 to 15, wherein the electrode layer overlies the substrate layer and the triboelectric layer overlies the electrode layer.

Aspect 17. An impact sensor, comprising:

a triboelectric sensor comprising a substrate layer, an electrode layer comprising a patterned electrode, and a triboelectric layer comprising a triboelectric polymer; and
a diode bridge configured to identify a peak voltage generated by an impact on the triboelectric sensor or vibration of the triboelectric sensor, wherein the patterned electrode is configured to identify a location of the impact or vibration on the triboelectric sensor.

Aspect 18. The impact sensor according to Aspect 17, wherein the patterned electrode comprises a conductive mesh grid or a plurality of electrode pads.

Aspect 19. The impact sensor according to Aspect 17 or 18, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

Aspect 20. The impact sensor according to any of Aspects 17 to 19, wherein the diode bridge is a full-wave bridge rectifier arranged in parallel with a resistor.

Aspect 21. The impact sensor according to any of Aspects 17 to 20, wherein the triboelectric polymer comprises cross-linkable polycarbonate comprising photoactive polycarbonate (XPC) and isofluoropropyl polyhedral oligomeric silsesquioxane (F-POSS).

Aspect 22. The impact sensor according to Aspect 21, wherein the cross-linkable polycarbonate comprises from about 70 wt% to about 99 wt% XPC and from about 1 wt% to about 30 wt% F-POSS.

Aspect 23. The impact sensor according to any of Aspects 17 to 20, wherein the triboelectric polymer comprises PVDF-TrFE and the PVDF-TrFE comprises from about 50 wt% to about 80 wt% polyvinylidenefluoride (PVDF) and from about 20 wt% to about 50 wt% trifluoroethylene.

Aspect 24. The impact sensor according to any of Aspects 17 to 23, wherein the substrate layer comprises glass, silicon, polyethylene naphthalate (PEN), polyethylene terephthalate (PET), polyetherimide (PEI), polycarbonate (PC), polyimide (PI), or a combination thereof.

Aspect 25. The impact sensor according to any of Aspects 1 to 24, wherein the electrode layer overlies the substrate layer and the triboelectric layer overlies the electrode layer.

Aspect 26. An athletic or health article comprising the impact sensor according to any of Aspects 1 to 25.

Aspect 27. The athletic or health article according to Aspect 26, wherein the athletic article is a helmet, a golf club, a paddle, or a bat.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

## Sensor fabrication and Materials Synthesis

An exemplary method for forming an impact sensor is summarized in the following steps:

Step 1. Flexible and rigid substrate preparation and cleaning. Two substrates were used to fabricate various devices: glass (2.54x2.54 square centimeter ($cm^2$)); and 125 $\mu$m thick Polyethylene naphthalate (PEN) (2.59 $cm^2$). Each substrate was cleaned with acetone, isopropanol (IPA), and deionized water for 5 minutes in an ultrasonic bath, followed by blow-drying with high purity nitrogen.

Step 2. Electrode Deposition. Approximately 20 nanometer (nm) titanium/80 nm gold electrodes were deposited onto the substrates by electron beam evaporation and patterned in the desired geometry using a predesigned fabricated shadow mask (fabricated by laser cutter).

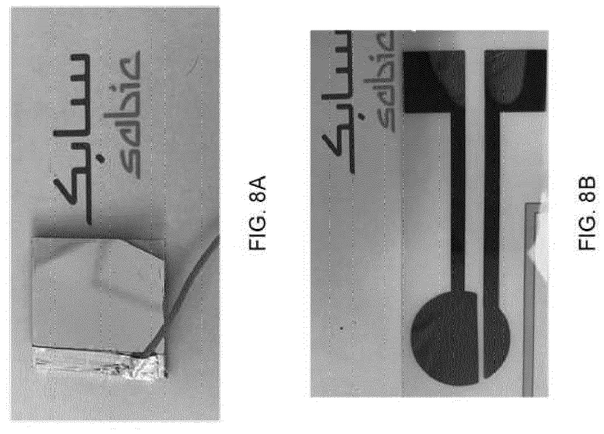

Step 3. Triboelectric layers deposition. 20 wt% PVDF-TrFE was dissolved in dimethylformamide (DMF). The PVDF-TrFE copolymer included 70 wt% polyvinyldieneflouride and 30 wt% trifluoroethylene. An analytical grade of DMF was used. Similarly, 20 wt% XPC-F-POSS was dissolved DMF. The XPC-F-POSS composition included 85% cross-linked polycarbonate (XPC) and 15% fluorinated polyhedral oligomeric silsesquioxane (F-POSS). The solutions were magnetically stirred at a temperature of about 50-60 °C until full dissolution was observed (about 2-4 hours). The solutions were then spin coated on the electrode-coated substrates at a fixed spin speed of 1000 rpm to obtain roughly 16 and 11 micron ($\mu$m) thickness films for PVDF-TrFE and XPC-F-POSS, respectively. Finally, the sensors were cured in a vacuum oven for 2 hours at 100 °C. Optical images of the fabricated sensors are shown in FIGS. 8A and 8B.

**Sensor Characterization:**

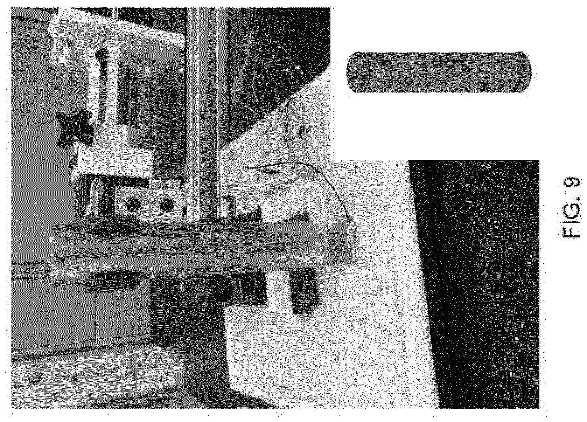

Voltage generated by the impact/shock sensor was obtained using a Keithley SourceMeter® 6430. It is a highly sensitive instrument that has the ability to supply and read voltage values and can record up to 75 data points per second. The SourceMeter® was connected with a LabVIEW program, and the circuit was placed on a breadboard to connect the samples being tested to the SourceMeter® to ensure continuous and immediate data logging. The experimental set-up is shown in FIG. 9, which included fabricated aluminum cylinders that act as the guide in which the pre-weighted masses travel through to hit the sample.

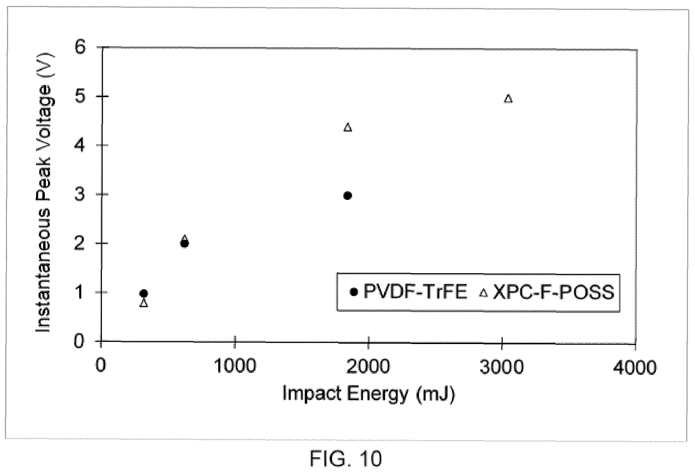

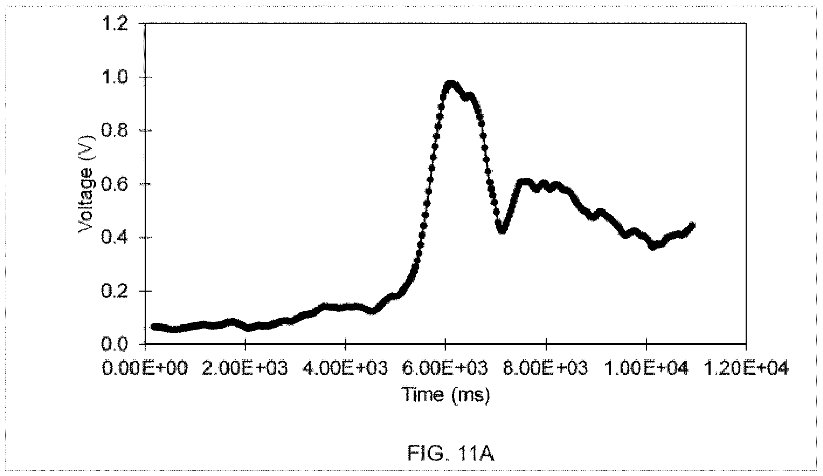

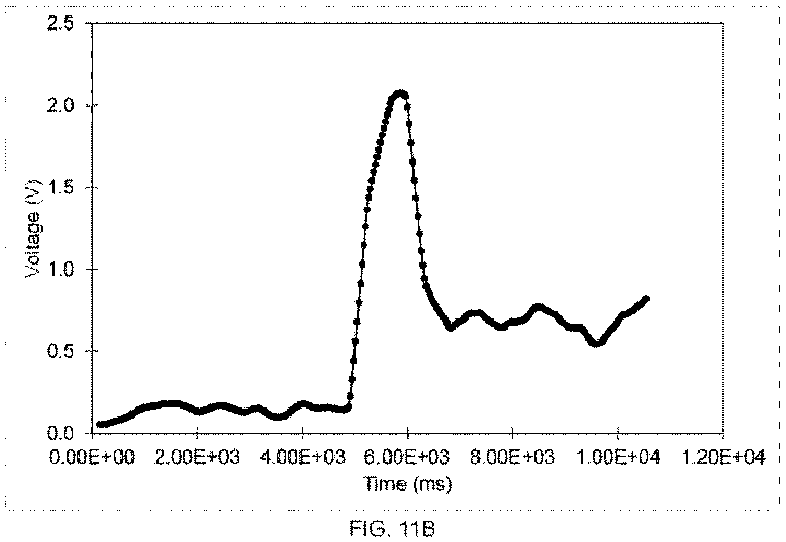

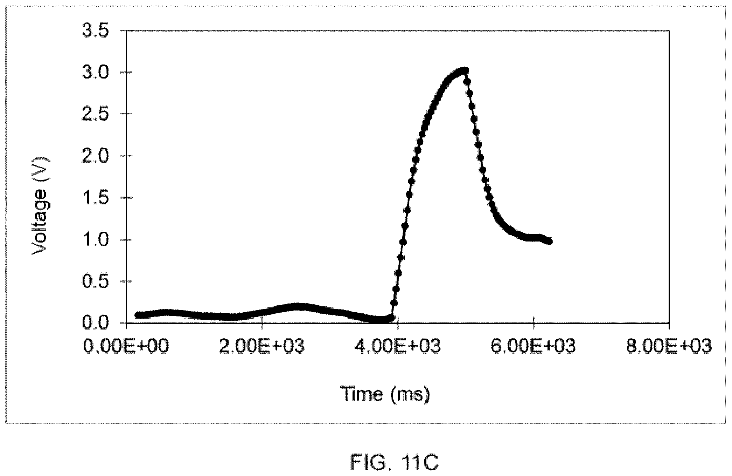

FIGS. 10-11C show the output voltage of the shock-detection sensor under variable applied impact energies caused by varying the freefalling objects height or weight, for the two active polymeric materials in the impact sensors: PVDF-TrFE and XPC-F-POSS. FIGS. 11A-11C show data for the PVDF-TrFE polymer. The graphs show that the impact or shock is being detected by measuring the instantaneous peak output voltage and subsequently a constant voltage corresponding to the weight of the object. The measured output voltage is correlated to the magnitude of the impact energy applied. As the impact energy increases so does the peak output voltage generated, and as expected the XPC-F-POSS polymer, which is a more electronegative material than PVDF-TrFE polymer, shows a higher output voltage at a given impact energy.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

**Claims**

1. An impact sensor, comprising:

   a triboelectric sensor comprising a substrate layer, an electrode layer, and a triboelectric layer comprising a triboelectric polymer; and
   a diode bridge configured to identify a peak voltage generated by an impact on the triboelectric sensor or vibration of the triboelectric sensor.

2. The impact sensor according to claim 1, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

3. The impact sensor according to claim 1 or 2, wherein the diode bridge is a full-wave bridge rectifier arranged in parallel with a resistor.

4. The impact sensor according to any of claims 1 to 3, wherein the triboelectric polymer comprises cross-linkable polycarbonate comprising photoactive polycarbonate (XPC) and isofluoropropyl polyhedral oligomeric silsesquioxane (F-POSS).

5. The impact sensor according to claim 4, wherein the cross-linkable polycarbonate comprises from about 70 wt% to about 99 wt% XPC and from about 1 wt% to about 30 wt% F-POSS.

6. The impact sensor according to any of claims 1 to 3, wherein the triboelectric polymer comprises PVDF-TrFE and the PVDF-TrFE comprises from about 50 wt% to about 80 wt% polyvinylidenefluoride (PVDF) and from about 20 wt% to about 50 wt% trifluoroethylene.

7. The impact sensor according to any of claims 1 to 6, wherein the substrate layer comprises glass, silicon, polyethylene naphthalate (PEN), polyethylene terephthalate (PET), polyetherimide (PEI), polycarbonate (PC), polyimide (PI), or a combination thereof.

8. The impact sensor according to any of claims 1 to 7, wherein the electrode layer overlies the substrate layer and the triboelectric layer overlies the electrode layer.

9. A method for determining impact or vibration on an object, comprising:

applying an impact sensor to the object, the impact sensor comprising

a triboelectric sensor comprising a substrate layer, an electrode layer, and a triboelectric layer comprising a triboelectric polymer; and
a diode bridge configured to identify a peak voltage generated by an impact on the triboelectric sensor or vibration of the triboelectric sensor;

measuring the peak voltage generated by the impact or vibration; and
determining force applied to the impact sensor from the peak voltage.

10. The method according to claim 9, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

11. An impact sensor, comprising:

a triboelectric sensor comprising a substrate layer, an electrode layer comprising a patterned electrode, and a triboelectric layer comprising a triboelectric polymer; and
a diode bridge configured to identify a peak voltage generated by an impact on the triboelectric sensor or vibration of the triboelectric sensor, wherein the patterned electrode is configured to identify a location of the impact or vibration on the triboelectric sensor.

12. The impact sensor according to claim 17, wherein the patterned electrode comprises a conductive mesh grid or a plurality of electrode pads.

13. The impact sensor according to claim 11 or 12, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

14. An athletic or health article comprising the impact sensor according to any of claims 1 to 13.

15. The athletic or health article according to claim 14, wherein the athletic article is a helmet, a golf club, a paddle, or a bat.

FIG. 1

FIG. 2

Triboelectric Sensor → Diode Bridge → Processing Unit

FIG. 3

Known Mass →(Known Height (h))→ Impact Sensor → Processing Unit → Impact Analysis

Impact Analysis — Voltage (V) vs Time; Due to impact force; Due to resting mass

FIG. 4A

FIG. 4B

500

Apply Impact Sensor to Object — 510

Measure peak voltage generated by impact or vibration on object — 520

Determine force applied to impact sensor from peak voltage — 530

FIG. 5

EP 3 742 143 A1

FIG. 6

FIG. 7A

FIG. 7B

EP 3 742 143 A1

FIG. 8A

FIG. 8B

FIG. 9

FIG. 10

FIG. 11A

EP 3 742 143 A1

FIG. 11B

FIG. 11C

Europäisches
Patentamt

European
Patent Office

Office européen
des brevets

# EUROPEAN SEARCH REPORT

Application Number

EP 19 17 5452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/028327 A1 (ALIANE ABDELKADER [FR]) 28 January 2016 (2016-01-28) | 1-11,13 | INV. G01L5/00 |
| Y | * abstract; figures * * paragraphs [0001] - [0005], [0014], [0015], [0028], [0033], [0040], [0046] - [0057], [0073] - [0076], [0078], [0079] * | 12,14,15 | |
| X | SIHONG WANG ET AL: "Triboelectric nanogenerators as self-powered active sensors", NANO ENERGY, vol. 11, 8 November 2014 (2014-11-08), pages 436-462, XP055548566, ISSN: 2211-2855, DOI: 10.1016/j.nanoen.2014.10.034 | 1,9,11 | |
| Y | * the whole document * | 14,15 | |
| X | US 2015/048846 A1 (POST ERNEST REHMI [US] ET AL) 19 February 2015 (2015-02-19) | 1,9,11 | TECHNICAL FIELDS SEARCHED (IPC) |
| Y | * abstract; figures 32,32,24 * | 12 | G01L |

The present search report has been drawn up for all claims

| Place of search | Date of completion of the search | Examiner |
|---|---|---|
| The Hague | 8 November 2019 | Stavroulis, Stefanos |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 17 5452

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2019

| Patent document cited in search report | Publication date | Patent family member(s) | | Publication date |
|---|---|---|---|---|
| US 2016028327 A1 | 28-01-2016 | EP | 2978123 A1 | 27-01-2016 |
| | | FR | 3024303 A1 | 29-01-2016 |
| | | US | 2016028327 A1 | 28-01-2016 |
| US 2015048846 A1 | 19-02-2015 | AU | 2014307232 A1 | 02-04-2015 |
| | | AU | 2014307234 A1 | 02-04-2015 |
| | | AU | 2014307235 A1 | 02-04-2015 |
| | | AU | 2014307236 A1 | 02-04-2015 |
| | | BR | 112015007256 A2 | 04-07-2017 |
| | | BR | 112015007261 A2 | 08-08-2017 |
| | | BR | 112015007265 A2 | 04-07-2017 |
| | | CN | 104903824 A | 09-09-2015 |
| | | CN | 104903826 A | 09-09-2015 |
| | | CN | 104969156 A | 07-10-2015 |
| | | CN | 104969157 A | 07-10-2015 |
| | | CN | 109828693 A | 31-05-2019 |
| | | CN | 109857257 A | 07-06-2019 |
| | | CN | 109871126 A | 11-06-2019 |
| | | EP | 2880515 A1 | 10-06-2015 |
| | | EP | 2880516 A1 | 10-06-2015 |
| | | EP | 2880517 A1 | 10-06-2015 |
| | | EP | 2883128 A1 | 17-06-2015 |
| | | EP | 3451128 A1 | 06-03-2019 |
| | | EP | 3454186 A1 | 13-03-2019 |
| | | JP | 6073505 B2 | 01-02-2017 |
| | | JP | 6419816 B2 | 07-11-2018 |
| | | JP | 6422973 B2 | 14-11-2018 |
| | | JP | 6431066 B2 | 28-11-2018 |
| | | JP | 2016509304 A | 24-03-2016 |
| | | JP | 2016528636 A | 15-09-2016 |
| | | JP | 2016528637 A | 15-09-2016 |
| | | JP | 2016530629 A | 29-09-2016 |
| | | JP | 2019032892 A | 28-02-2019 |
| | | KR | 20150055018 A | 20-05-2015 |
| | | KR | 20150055019 A | 20-05-2015 |
| | | KR | 20160041844 A | 18-04-2016 |
| | | KR | 20160041845 A | 18-04-2016 |
| | | US | 2015048846 A1 | 19-02-2015 |
| | | US | 2015049034 A1 | 19-02-2015 |
| | | US | 2015049055 A1 | 19-02-2015 |
| | | US | 2015049056 A1 | 19-02-2015 |
| | | US | 2019286265 A1 | 19-09-2019 |
| | | WO | 2015023131 A1 | 19-02-2015 |
| | | WO | 2015023133 A1 | 19-02-2015 |
| | | WO | 2015023134 A1 | 19-02-2015 |
| | | WO | 2015023135 A1 | 19-02-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 17 5452

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2019

| Patent document cited in search report | Publication date | Patent family member(s) | Publication date |
|---|---|---|---|
| ------------------------------------------------------------------------------------------------- | | | |

EPO FORM P0459

For more details about this annex : see Official Journal of the European Patent Office, No. 12/82

page 2 of 2